# EUROPEAN PATENT SPECIFICATION

(11) **EP 3 346 652 B1**
(45) Date of publication and mention of the grant of the patent: **25.12.2019**
(21) Application number: 16841123.9
(22) Date of filing: 31.08.2016
(51) Int. Cl.: H04L 12/717, G06F 11/30, G06F 13/00, H04L 12/70, G06F 11/07

(54) **VIRTUAL NETWORK MONITORING SYSTEM, VIRTUAL NETWORK MONITORING METHOD, AND RECORDING MEDIUM**
VIRTUELLES NETZWERKÜBERWACHUNGSSYSTEM, VIRTUELLES NETZWERKÜBERWACHUNGSVERFAHREN UND AUFZEICHNUNGSMEDIUM
SYSTÈME DE SURVEILLANCE DE RÉSEAU VIRTUEL, PROCÉDÉ DE SURVEILLANCE DE RÉSEAU VIRTUEL, ET SUPPORT D'ENREGISTREMENT

(30) Priority: 01.09.2015 JP 2015171878
(43) Date of publication of application: 11.07.2018
(73) Proprietor: NEC Corporation, Tokyo 108-8001 (JP)
(72) Inventor: SATO, Yoshinori, Tokyo 108-0073 (JP); SAKAMOTO, Masahiro, Tokyo 108-0073 (JP); MIYAZAKI, Tomoaki, Tokyo 108-8001 (JP)
(74) Representative: Reeve, Nicholas Edward
(86) International application number: PCT/JP2016/003968
(87) International publication number: WO 2017/038089

(56) References cited:
- JP-A- 2012 099 048
- JP-A- 2014 183 535
- JP-A- 2015 012 317
- US-A1- 2015 109 329

## Description

### Technical Field

The present invention relates to a virtual network monitoring system, a virtual network monitoring method, and a recording medium for recording a program therefor.

### Background Art

WO2013/153567 discloses a technique that enables easy visualization of association between a logical configuration in a virtualization system and a physical configuration.

JP 2012-099048 discloses a technique that thoroughly expresses, with a tree structure, a relation of physical resources used by virtual resources such as a virtual server, and automatically collects information of the virtual resources that share the physical resources.

JP2015/012317 discloses a virtual route identifying unit that identifies a virtual route connecting two apparatuses that are search objects of a route on the basis of a flow table; an L3 route identifying unit issues a trance-route command to search for a path between two adjacent L3 devices in the virtual route; and thereby a route identifying device identifies a physical route connecting two virtual communication devices.

JP2014/183535 discloses a communication system comprising: a configuration DB for storing configuration information showing a virtual network device connected to a physical port included by each of other virtual network devices; a flow table for specifying action with regards to communication traffic when a virtual network device receives the communication traffic; a table calculation unit which extracts a combination of a virtual network device and a physical port in action information from the flow table, retrieves another virtual network device connected to the physical port of the virtual network device from the configuration DB by using a result of the extraction as a retrieval key, and calculates a transmission source/transmission destination table for showing a combination between the two virtual network devices connected to each other on the basis of the retrieval key and a result of the retrieval; and a path information calculation unit for calculating a path between arbitrary two virtual network devices on the basis of the transmission source/transmission destination table.

US2015/109329 discloses a computer-implemented method for augmenting at least one physical device with virtual information indicia corresponding to the at least on physical device supporting a virtualization infrastructure is observed. Based on the observed indicia, virtual information of said virtualization infrastructure correlating to the at least one physical device is displayed.

JP 2010-258614, JP 2007-318553 and JP 2006-157891 are also known.

In virtualization of a network, a connection configuration between a node and the network is virtualized, and hidden under software. For this reason, it is not easy for a maintenance person (an infrastructure administrator) to monitor a virtual network on the basis of the connection configuration between a virtual node and a virtual network.

For example, even when communication abnormality occurs in a network, it may be difficult to detect malfunction and identify a suspected location in a physical infrastructure when malfunction is detected in software that configures a virtual network, such as an open virtual switch (OVS) and a bridge.

The virtual system described in WO2013/153567 visualizes a connection relation between a virtual machine and a virtual network. However, there is no description of monitoring a connection configuration between the virtual machine and the virtual network.

The virtualization technique described in JP 2012-099048 can express, with a tree structure, a relation between virtual resources and physical resources. However, there is no description of monitoring a connection configuration between a virtual machine and a virtual network.

For this reason, we have appreciated that it would be desirable to solve a problem that monitoring a virtual network based on a connection configuration between a virtual node and a virtual network is not easy, which is the above-described problem.

### SUMMARY OF THE INVENTION

A virtual network monitoring system of the present invention including a control plane that transfers a control signal for a virtual network, and a data plane that transfers a packet of the virtual network, comprising:
agent means for acquiring a connection configuration between a virtual node in a physical environment and the virtual network;
virtual network management means for acquiring a connection configuration between the virtual node in a virtual environment and the virtual network; and
virtual network monitoring means for monitoring the virtual network, on the data plane, based on a connection configuration between the virtual node in the physical environment and the virtual network, and a connection configuration between the virtual node in the virtual environment and the virtual network.

A virtual network monitoring method of the present invention comprising:
acquiring a connection configuration between a virtual node in a physical environment and a virtual network;
acquiring a connection configuration between the virtual node in a virtual environment and the virtual network; and
monitoring the virtual network, on a data plane transferring a packet of the virtual network, based on a connection configuration between a virtual node in the physical environment and the virtual network, and a connection configuration between the virtual node in the virtual environment and the virtual network.

A corresponding computer program for performing the method is also provided.

According to the present invention, which is defined in detail in the appended independent claims 1, 5 and 8, an advantageous effect that monitoring a virtual network based on a connection configuration between a virtual node and a virtual network is made easy can be accomplished.

### BRIEF DESCRIPTION OF DRAWINGS

Fig. 1 is a block diagram illustrating one example of a configuration of a virtual network monitoring system.
Fig. 2 is a diagram illustrating one example of operation of visualizing connection information between a virtual node and a virtual network, in a virtual network monitoring system.
Fig. 3 is a diagram illustrating one example of operation of monitoring continuity of the virtual network, in the virtual network monitoring system.
Fig. 4 is a diagram illustrating one example of connection information between the virtual node and the virtual network.
Fig. 5 is a diagram illustrating one example of a continuity-monitoring target section.
Fig. 6 is a sequence diagram illustrating one example of operation of the virtual network monitoring system.
Fig. 7 is a sequence diagram illustrating one example of operation of the virtual network monitoring system when malfunction occurs.
Fig. 8 is a block diagram illustrating one example of a configuration of a virtual network monitoring system according to a second example embodiment.

### [Description of Embodiments]

### <First Example Embodiment>

A first example embodiment of the present invention is described in detail with reference to the drawings.

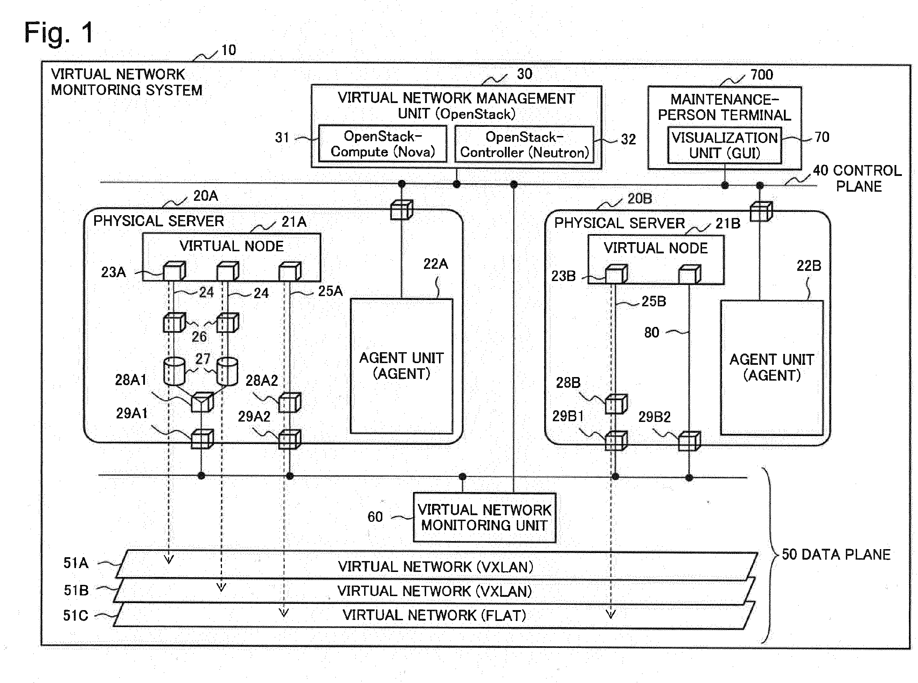

Fig. 1 is a block diagram illustrating one example of a configuration of a virtual network monitoring system 10.

The virtual network monitoring system 10 includes physical servers 20A and 20B, a virtual network management unit 30 (hereinafter, written also as an OpenStack (registered trademark) 30), a control plane 40, a data plane 50, a virtual network monitoring unit 60, and a visualization unit 70 (hereinafter, written also as a graphical user interface (GUI) 70). Note that although Fig. 1 illustrates the configuration of the two physical servers, i.e., the physical servers 20A and 20B, the number of the physical servers may be an arbitrary number that is equal to or more than two.

The physical servers 20A and 20B include virtual nodes 21A and 21B and agent units 22A and 22B (hereinafter, written also as agents 22A and 22B). For example, the physical servers 20A and 20B are each constituted by a computer device including at least one processor and a memory.

When there is no limitation on whether each constituent element is included in the physical server 20A or the physical server 20B, the description thereof is made with the alphabets "A" and "B" being omitted like the virtual node 21 for example, in the following explanations. The similar description applies to the constituent elements in Fig. 1 including the virtual nodes 21A and 21B, the agent units 22A and 22B, and the virtual networks 51A, 51B, and 51C.

The virtual nodes 21A and 21B are virtual servers constructed on the physical servers 20A and 20B.

The agent units 22A and 22B acquire connection configurations between the virtual nodes 21A and 21B in physical environments of the physical servers 20A and 20B and the virtual networks 51A, 51B, and 51C (or the data plane 50). The agent unit 22 is constituted by hardware such as a logical circuit. Alternatively, a processor of the physical server 20 that is a computer may execute a program on a memory not illustrated, thereby implementing the agent unit 22.

Each of virtual network interface cards (VNIC) 23A and 23B is one or more virtual network interface cards. Note that Fig. 1 illustrates an example in which the number of the VNICs 23A is three, and the number of the VNICs 23B is two, but the respective numbers are not limited to these, and may be arbitrary numbers. The virtual nodes 21A and 21B output and input data via the VNICs 23A and 23B.

The virtual node 21A is connected to virtual extensive local area networks (VXLANs) 24 constituting the virtual networks 51A and 51B, and to a Flat (FLAT) 25A constituting the virtual network 51C.

The VXLANs 24 are connected to the virtual network 51A or the virtual network 51B, from a starting point of the VNICs 23A via two internal bridges 26, two VXLAN tunnel end points (VTEP) 27, an external bridge 28A1, and a physical network interface card (NIC) 29A1. For example, the VXLAN 24 is configured by using a tunneling protocol capable of constructing a network of a layer 2 (L2) on a network of a layer 3 (L3).

The internal bridge 26 is an internal bridge of a virtual environment and connects the VNIC 23A to the VTEP 27.

The VTEP 27 is a tunnel end point provided, in the VXLAN 24, in a unit of the physical server 20.

The external bridge 28A1 is an external bridge of the virtual environment (in the physical environment) and connects the VTEPs 27 to the physical NIC 29A1. Note that in the configuration of Fig. 1, the external bridge 28A1 combines paths of the two VXLANs 24, and connects the combined path to the physical NIC 29A1.

The physical NIC 29A1 is a physical network interface card that connects the physical server 20A to the outside.

The FLAT 25A is connected to the virtual network 51C, from a starting point of the VNIC 23A, via an external bridge 28A2 and a physical NIC 29A2. In the case of the FLAT 25A, the external bridge 28A2 connects the VNIC 23A directly to the physical NIC 29A2. For example, the FLAT 25A is constituted by a platform capable of performing direct communication with a global IP address.

The virtual node 21B is connected to a FLAT 25B constituting the virtual network 51C, and to a PASS THROUGH 80.

The FLAT 25B is connected to the virtual network 51C, from a starting point of a VNIC 23B, via an external bridge 28B and a physical NIC 29B1.

The external bridge 28B is an external bridge of the virtual environment (in the physical environment) and connects the VNIC 23B to the physical NIC 29B1.

The PASS THROUGH 80 is connected directly to a physical NIC 29B2, from a starting point of the VNIC 23B. For example, the PASS THROUGH 80 is configured with a PASS THROUGH that is a technique of connecting a physical environment directly to a virtual environment.

The physical NIC 29B2 is a physical network interface card that connects the physical server 20B to the outside.

In Fig. 1, the solid lines indicate paths of data in the physical environment, and the dotted lines indicate paths of data in the virtual environment.

The virtual network management unit 30 acquires a connection configuration between the virtual nodes 21A and 21B in the virtual environment and the virtual networks 51A, 51B, and 51C. For example, the virtual network management unit 30 is constituted by an OpenStack 30. Hereinafter, the virtual network management unit 30 is written also as the OpenStack 30. The OpenStack 30 is software for constructing an infrastructure of cloud computing, and provides a series of functions necessary for developing an infrastructure-as-a-service (IaaS) service. Each function of the OpenStack 30 is modularized, and only necessary modules can be used in combination. The modules constituting the OpenStack 30 include an OpenStack-Compute (Nova) 31 that performs construction and control of virtualization infrastructure, an OpenStack-Controller (Neutron) 32 that performs virtualization and management of the network and the like. A processor of the virtual network monitoring system 10 may execute a program on a memory not illustrated, thereby implementing the virtual network management unit 30.

The control plane 40 transfers a control signal for the virtual network 51.

The data plane 50 transfers a packet of the virtual network 51. For example, in the data plane 50, the virtual network (VXLAN) 51A, the virtual network (VXLAN) 51B, and the virtual network (FLAT) 51C are configured.

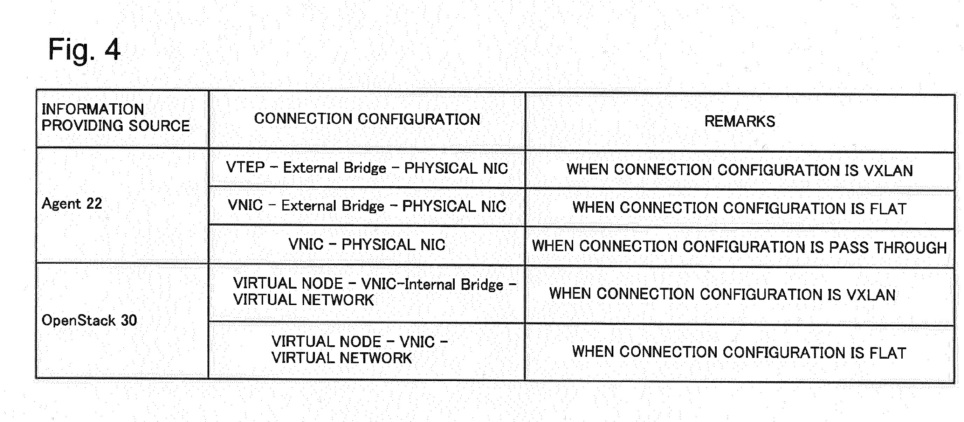

The virtual network monitoring unit 60 is connected to the data plane 50, and acquires, from the agent unit 22, a connection configuration between the virtual node 21 in the physical environment of the physical server 20 and the virtual network 51. Further, the virtual network monitoring unit 60 hooks an event of the OpenStack 30, and acquires a connection configuration between the virtual node 21 in the virtual environment and the virtual network 51. Then, on the data plane 50, the virtual network monitoring unit 60 monitors the virtual network 51 on the basis of the respective acquired connection configurations (Fig. 4). The virtual network monitoring unit 60 is constituted by hardware such as a logical circuit. Alternatively, a processor of the virtual network monitoring system 10 may execute a program on a memory not illustrated, thereby implementing the virtual network monitoring unit 60.

The visualization unit (GUI) 70 provides and visualizes, as an application programming interface (API), the above-described connection information acquired by the virtual network monitoring unit 60. The visualization unit (GUI) 70 is constituted by a display, for example. The visualization unit 70 may be a part of functions of a maintenance-person terminal 700.

The virtual network monitoring system 10 according to the present example embodiment targets a virtual network of an overlay, such as the VXLAN 24, that uses a tunneling protocol. The tunneling protocol is a protocol for virtually generating a tunnel on a public line network such as the Internet, for example, establishing, therethrough, point-to-point protocol (PPP) connection, and thereby constructing a virtual private network (VPN). The overlay is an upper-layer network constructed independently of topology of a lower layer of a computer network, and is also referred to as an overlay network.

The virtual network monitoring system 10 according to the present example embodiment includes a function of monitoring malfunction of a switch implemented by a function such as a packet Internet groper (ping) and a simple network management protocol trap (SNMPTrap), and monitoring malfunction between the switches, in order to maintain the virtualized network. Further, in addition to the function, the virtual network monitoring system 10 monitors malfunction, at an application layer constituting the virtual network 51.

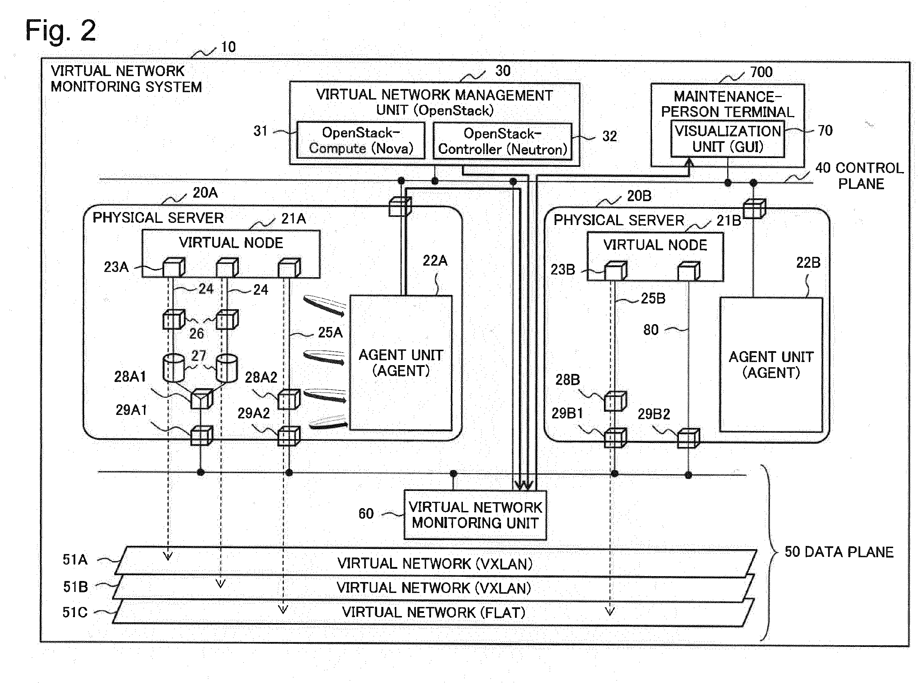

Fig. 2 is a diagram illustrating one example of operation of visualizing connection information between the virtual node 21 and the virtual network 51, in the virtual network monitoring system 10.

As illustrated in Fig. 2, the virtual network monitoring system 10 perform the following operation (1) to (6) in the configuration of the virtual network monitoring system 10 illustrated in Fig. 1.
(1) The virtual network monitoring system 10 installs the agent unit 22 in each physical server 20.
(2) The virtual network monitoring system 10 arranges the virtual network monitoring unit 60 in the physical infrastructure.
(3) The agent unit 22 acquires a connection configuration between the virtual node 21 in the physical environment of the physical server 20 and the virtual network 51, on the basis of information concerning hardware connection held by the physical server 20, for example.
(4) The virtual network monitoring unit 60 hooks an event of the OpenStack 30, and acquires a connection configuration between the virtual node 21 in the virtual environment and the virtual network 51, on the basis of information of the event performed by the OpenStack 30, for example.
(5) The virtual network monitoring unit 60 generates connection information (Fig. 4 described below) between the virtual node 21 and the virtual network 51, on the basis of the information of (3) and (4).
(6) The visualization unit 70 visualizes a network configuration, on the basis of the information of (5).

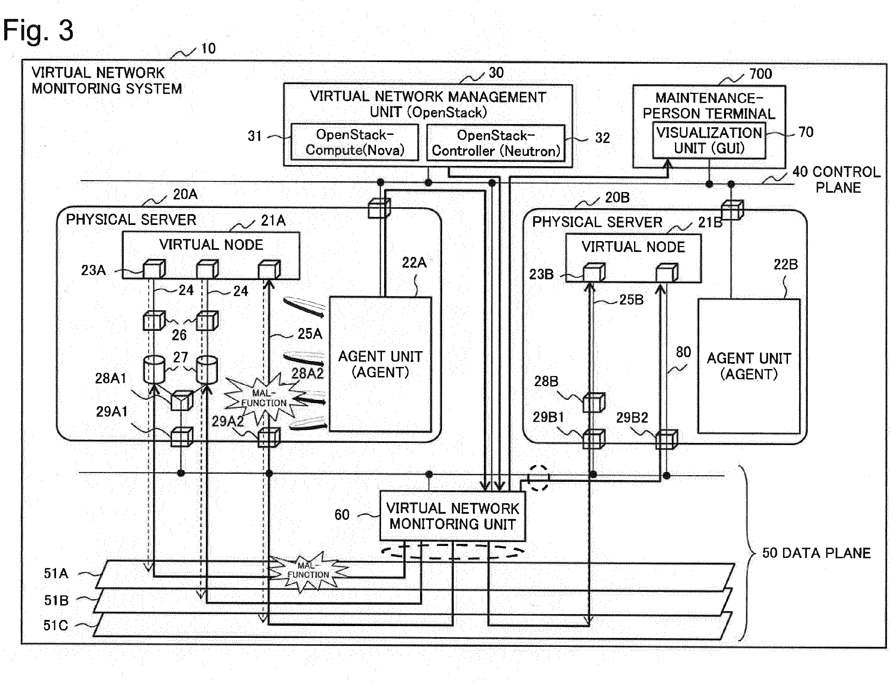

Fig. 3 is a diagram illustrating one example of operation of monitoring continuity of the virtual network 51, in the virtual network monitoring system 10.

A configuration of the virtual network monitoring system 10 is the same as that of Figs. 1 and 2.

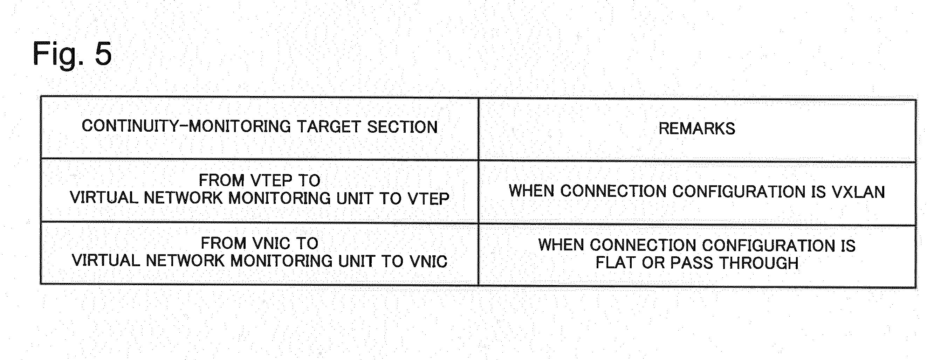

As illustrated in Fig. 3, in the configuration of the virtual network monitoring system 10 illustrated in Fig. 1, the virtual network monitoring system 10 performs the following operation (1) to (6).
(1) The agent unit 22 monitors a connection configuration between the virtual node 21 in the physical environment of the physical server 20 and the virtual network 51.
(2) The virtual network monitoring unit 60 acquires the latest connection configuration from the agent unit 22.
(3) The virtual network monitoring unit 60 sets a continuity-monitoring target section (Fig. 5), on the basis of the information (Fig. 4) of (2), and monitors continuity between a plurality of the virtual nodes 21, e.g., between the virtual node 21A and the virtual node 21B (the paths surrounded by the dotted line in Fig. 3).
(4) When detecting change of a connection configuration or a continuity state caused by malfunction occurrence or the like, the virtual network monitoring unit 60 updates connection information (Fig. 4) between the virtual node 21 and the virtual network 50. Note that as illustrated in Fig. 3, a location of malfunction is assumed to be the virtual network (VXLAN) 51A or the virtual network (FLAT) 51C, for example.
(5) The virtual network monitoring unit 60 outputs connection information to the visualization unit 70 in order to notify a maintenance person of the update of the connection information.
(6) The visualization unit 70 visualizes a malfunction location in the virtual network 51, on the basis of the information of (5).

According to a feature of Fig. 3, the virtual network monitoring unit 60 is inserted on the data plane 50 of the virtual network 51, and continuity (refer to Fig. 5) between the virtual nodes 21 is monitored starting from the virtual network monitoring unit 60.

Fig. 4 is a diagram illustrating one example of connection information between the virtual node 21 and the virtual network 50.

The virtual network monitoring unit 60 generates the connection information illustrated in Fig. 4, on the basis of information acquired from the agent 22 and the OpenStack 30.

The upper layer in Fig. 4 illustrates a connection configuration between the virtual node 21 in the physical environment of the physical server 20 and the virtual network 51, acquired from the agent 22. The agent 22 that is an information providing source provides a connection configuration for each case of the VXLAN 24, the FLAT 25, and the PASS THROUGH 80.

The lower layer in Fig. 4 illustrates a connection configuration between the virtual node 21 in the virtual environment and the virtual network 51, acquired from the OpenStack 30. The OpenStack 30 that is an information providing source provides a connection configuration for each case of the VXLAN 24 and the FLAT 25.

Fig. 5 is a diagram illustrating one example of a continuity-monitoring target section.

The virtual network monitoring unit 60 sets continuity-monitoring target sections illustrated in Fig. 5, on the basis of the information illustrated in Fig. 4.

For example, the upper layer in Fig. 5 illustrates the continuity-monitoring target section for the case where the connection configuration is the VXLAN 24. The target section in this case is from one VTEP 27 to another VTEP 27 via the virtual network monitoring unit 60. In other words, in Fig. 4, the VXLAN 24 represents a connection configuration of which starting point is the one VTEP 27. For this reason, the virtual network monitoring unit 60 sets, as the continuity-monitoring target section, the section starting from the one VTEP 27, via the virtual network monitoring unit 60, and leading to another VTEP 27 that is a connection destination.

For example, the lower layer in Fig. 5 illustrates a continuity-monitoring target section for the case where a connection configuration is the FLAT 25 or the PASS THROUGH 80. The target section in this case is from one VNIC 23 to another VNIC 23 via the virtual network monitoring unit 60.

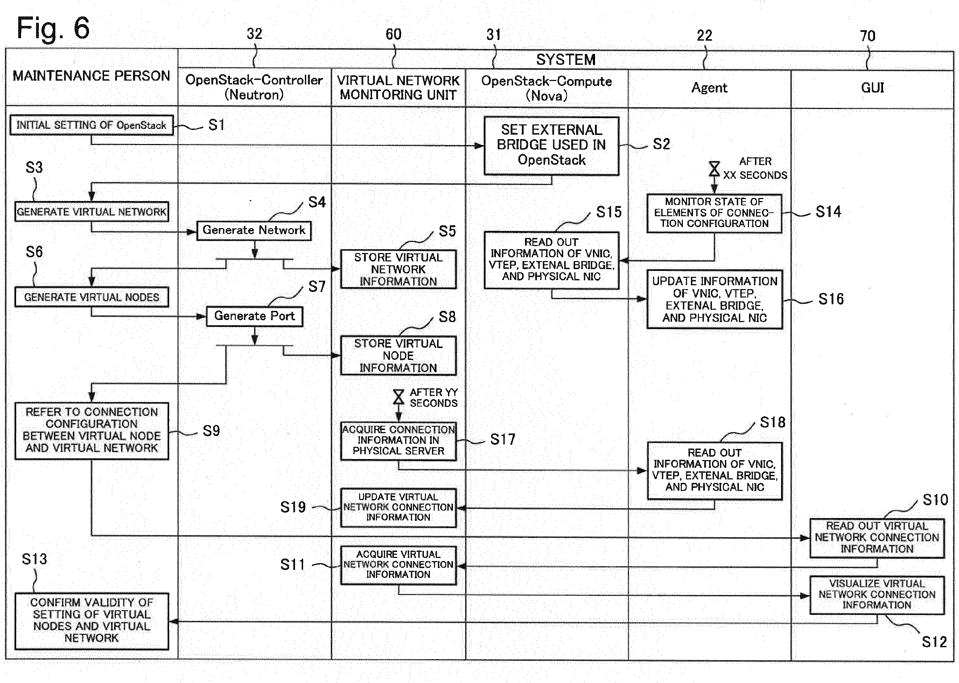

Fig. 6 is a sequence diagram illustrating one example of operation of the virtual network monitoring system 10.

First, the maintenance-person terminal 700 (the maintenance-person terminal 700 is referred to as a maintenance person hereinafter) performs initial setting of the OpenStack 30 (step S1). Then, the OpenStack-Compute 31 sets the external bridge 28 used in the OpenStack 30 (step S2).

Next, the maintenance person generates information concerning the virtual network 51 (step S3). Then, on the basis of the information, the OpenStack-Controller 32 generates the virtual network 51 (step S4). Further, the virtual network monitoring unit 60 stores information concerning the generated virtual network 51 (step S5).

The maintenance person generates information concerning the virtual node 21 (step S6). Then, on the basis of the information, the OpenStack-Controller 32 generates virtual ports (the virtual nodes 21) (step S7). Further, the virtual network monitoring unit 60 stores information concerning the virtual nodes 21 (step S8).

The maintenance person refers to a connection configuration between the virtual node 21 and the virtual network 51 (step S9). For this purpose, the GUI (the visualization unit) 70 reads out connection information between the virtual node 21 and the virtual network 51 (step S10). Receiving this, the virtual network monitoring unit 60 acquires the connection information between the virtual node 21 and the virtual network 51 (step S11). Then, the GUI (the visualization unit) 70 visualizes the connection information between the virtual node 21 and the virtual network 51 (step S12).

Thereby, on the basis of display of the GUI (the visualization unit) 70, the maintenance person can confirm validity of setting of the virtual nodes 21 and the virtual network 51 (step S13).

Incidentally, in order to perform monitoring of a state of elements of the connection configuration (at step S14), the agent unit 22 reads out, from the OpenStack-Compute 31, information of the VNIC 23, the VTEP 27, the external bridge 28, and the physical NIC 29 (step S15), every predetermined time (XX seconds) at any time. Then, the agent unit 22 updates the information of the VNIC 23, the VTEP 27, the external bridge 28, and the physical NIC 29 (step S16).

In order to acquire connection information in the physical server 20 (step S17), the virtual network monitoring unit 60 reads out, from the agent unit 22, information of the VNIC 23, the VTEP 27, the external bridge 28, and the physical NIC 29 (step S18), every predetermined time (YY seconds) at any time. Then, depending on the read-out information, the virtual network monitoring unit 60 updates the connection information between the virtual node 21 and the virtual network 51 (step S19).

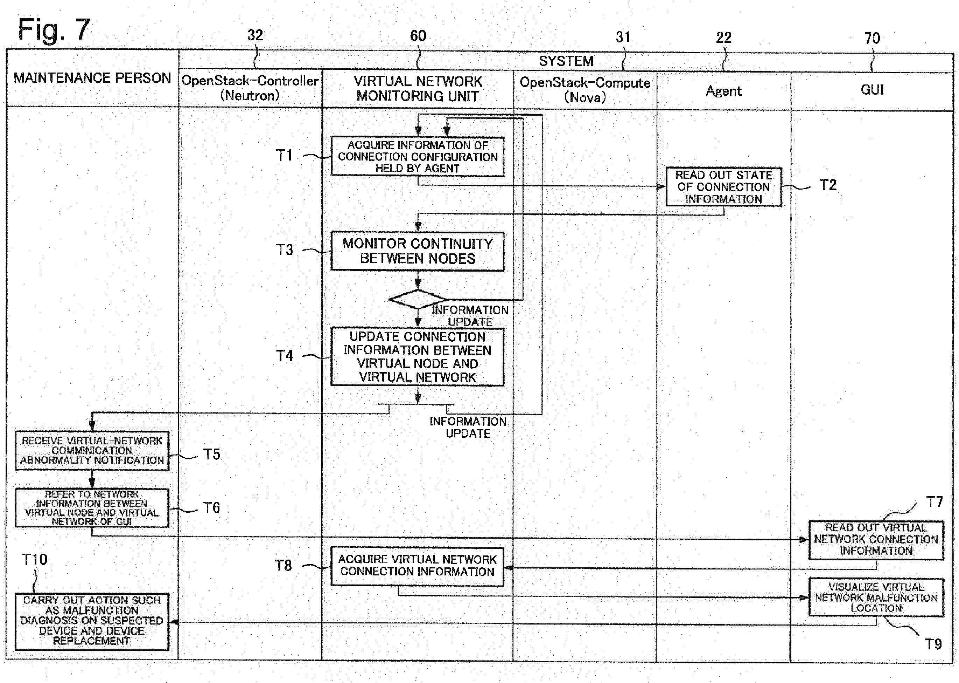

Fig. 7 is a sequence diagram illustrating one example of operation of the virtual network monitoring system 10 when malfunction occurs.

First, the virtual network monitoring unit 60 acquires information of a connection configuration held by the agent unit 22 (step T1). For this purpose, the agent unit 22 reads out a state of the connection configuration (step T2).

Next, the virtual network monitoring unit 60 monitors continuity between the virtual nodes 21 (step T3). Then, on the basis of the monitoring result, the virtual network monitoring unit 60 updates connection information between the virtual node 21 and the virtual network 51 (step T4). Note that the virtual network monitoring unit 60 appropriately updates the information at the steps T3 and T4.

A case where the maintenance person receives notification of abnormality in communication of the virtual network 51 (step T5) is assumed. The maintenance person refers to the connection information between the virtual node 21 and the virtual network 51, at the GUI (the visualization unit) 70 (step T6). For this purpose, the GUI (the visualization unit) 70 reads out the connection information between the virtual node 21 and the virtual network 51 (step T7). In response to this, the virtual network monitoring unit 60 acquires the connection information between the virtual node 21 and the virtual network 51 (step T8). Then, the GUI (the visualization unit) 70 visualizes a malfunction location in the virtual network 51 (step T9).

Lastly, the maintenance person carries out action such as malfunction diagnosis on a suspected device and device replacement (step T10).

The virtual network monitoring system 10 according to the present example embodiment accomplishes advantageous effects as described below.

Monitoring the virtual network 51 based on a connection configuration between the virtual node 21 and the virtual network 51 is made easy.

The reason is that a configuration is made so as to monitor the virtual network 51, on the data plane 50, on the basis of a connection configuration between the virtual node 21 in a physical environment and the virtual network 51, and a connection configuration between the virtual node 21 in a virtual environment and the virtual network 51. Using such connection configurations makes it possible to visualize the virtual network, on the data plane that is not taken into account in the PTLs 1 and 2, and to then monitor the virtual network.

### <Second Example Embodiment>

Next, a second example embodiment of the present invention is described in detail with reference to the drawings.

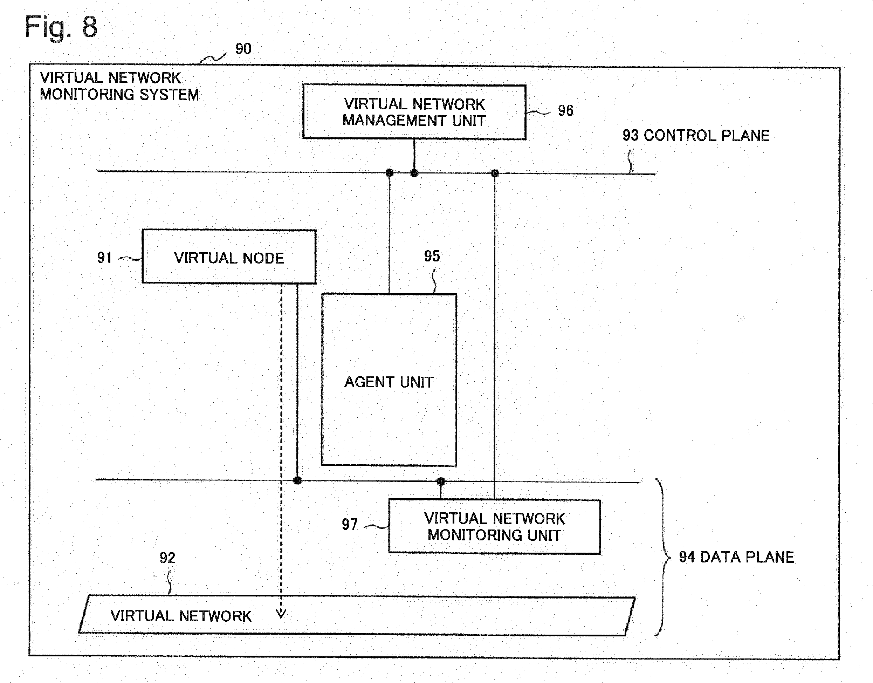

Fig. 8 is a block diagram illustrating one example of a configuration of a virtual network monitoring system 90 according to the second example embodiment.

The virtual network monitoring system 90 includes a control plane 93 that transfers a control signal for a virtual network 92, and a data plane 94 that transfers a packet of the virtual network 92.

The virtual network monitoring system 90 includes an agent unit 95, a virtual network management unit 96, and a virtual network monitoring unit 97.

The agent unit 95 acquires a connection configuration between a virtual node 91 in a physical environment and the virtual network 92.

The virtual network management unit 96 acquires a connection configuration between the virtual node 91 in a virtual environment and the virtual network 92.

The virtual network monitoring unit 97 monitors the virtual network, on the data plane 94, on the basis of the connection configuration between the virtual node 91 in the physical environment and the virtual network 92, and the connection configuration between the virtual node 91 in the virtual environment and the virtual network 92.

The virtual network monitoring system 90 according to the present example embodiment accomplishes advantageous effects as described below.

Monitoring the virtual network 92 based on a connection configuration between the virtual node 91 and the virtual network 92 is made easy.

The reason is that a configuration is made so as to monitor the virtual network 92, on the data plane 94, on the basis of a connection configuration between the virtual node 91 in a physical environment and the virtual network 92, and a connection configuration between the virtual node 91 in a virtual environment and the virtual network 92. Using such connection configurations makes it possible to visualize the virtual network, on the data plane that is not taken into account in the PTLs 1 and 2, and to then monitor the virtual network.

Although the example embodiments of the present invention are described above with reference to the drawings, the present invention is not limited to the above-described example embodiments. Various modifications that can be understood by those skilled in the art can be made on a configuration and details of the present invention, within the scope of the present invention.

### [Reference signs List]

- 10: Virtual network monitoring system
- 20: Physical server
- 20A: Physical server
- 20B: Physical server
- 21: Virtual node
- 21A: Virtual node
- 21B: Virtual node
- 22: Agent unit
- 22A: Agent unit
- 22B: Agent unit
- 23: VNIC
- 23A: VNIC
- 23B: VNIC
- 24: VXLAN
- 25: FLAT
- 25A: FLAT
- 25B: FLAT
- 26: Internal bridge
- 27: VTEP
- 28: External bridge
- 28A1: External bridge
- 28A2: External bridge
- 28B: External bridge
- 29: Physical NIC
- 29A1: Physical NIC
- 29A2: Physical NIC
- 29B1: Physical NIC
- 29B2: Physical NIC
- 30: Virtual network management unit
- 31: OpenStack-Compute
- 32: OpenStack-Controller
- 40: Control plane
- 50: Data plane
- 51: Virtual network
- 51A: Virtual network
- 51B: Virtual network
- 51C: Virtual network
- 60: Virtual network monitoring unit
- 70: Visualization unit
- 700: Maintenance-person terminal
- 80: PASS THROUGH
- 90: Virtual network monitoring system
- 91: Virtual node
- 92: Virtual network
- 93: Control plane
- 94: Data plane
- 95: Agent unit
- 96: Virtual network management unit
- 97: Virtual network monitoring unit

## Claims

1. A virtual network monitoring system (10) including a control plane (40) that transfers a control signal for a virtual network (51), and a data plane (50) that transfers a packet of the virtual network (51), comprising:
agent means (22) for acquiring a connection configuration between a virtual node (21) in a physical environment and the virtual network (51);
virtual network management means (30) for acquiring a connection configuration between the virtual node (21) in a virtual environment and the virtual network (51); and
virtual network monitoring means (60) for monitoring the virtual network (51), on the data plane (40), based on a connection configuration between the virtual node (21) in the physical environment and the virtual network (51), and a connection configuration between the virtual node (21) in the virtual environment and the virtual network (51).

2. The virtual network monitoring system (10) according to Claim 1, further comprising visualization means (70) for visualizing the connection configuration between the virtual node (21) in the physical environment and the virtual network (51), and the connection configuration between the virtual node (21) in the virtual environment and the virtual network (51).

3. The virtual network monitoring system according to Claim 2, wherein
the virtual network monitoring means (60) detects a malfunction location, based on the connection configuration between the virtual node (21) in the physical environment and the virtual network (51), and the connection configuration between the virtual node (21) in the virtual environment and the virtual network (51), and
the visualization means (70) visualizes the malfunction location.

4. The virtual network monitoring system according to claim 1, wherein the virtual network management means is an OpenStack.

5. A virtual network monitoring method for use in a virtual network (51) that includes a control plane (40) that transfers a control signal for the virtual network (51), and a data plane (50) that transfers a packet of the virtual network (51), the method comprising:
acquiring a connection configuration between a virtual node (21) in a physical environment and a virtual network (51);
acquiring a connection configuration between the virtual node (21) in a virtual environment and the virtual network (51); and
monitoring the virtual network (51), on the data plane (50) transferring a packet of the virtual network (51), based on a connection configuration between a virtual node (21) in the physical environment and the virtual network (51), and a connection configuration between the virtual node (21) in the virtual environment and the virtual network (51).

6. The virtual network monitoring method according to Claim 5, further comprising visualizing the connection configuration between the virtual node (21) in the physical environment and the virtual network (51), and the connection configuration between the virtual node (21) in the virtual environment and the virtual network (51).

7. The virtual network monitoring method according to Claim 6, further comprising:
detecting a malfunction location, based on the connection configuration between the virtual node (21) in the physical environment and the virtual network (51), and the connection configuration between the virtual node (21) in the virtual environment and the virtual network (51); and
visualizing the malfunction location.

8. A computer program which, when executed on a computer, causes the computer to execute the steps of any of the method claims 5 to 7.

## Patentansprüche

1. Virtuelles Netzwerküberwachungssystem (10) mit einer Steuerebene (40), die ein Steuersignal für ein virtuelles Netzwerk (51) überträgt, und einer Datenebene (50), die ein Paket des virtuellen Netzwerks (51) überträgt, bestehend aus:
Agentenmitteln (22) zum Erfassen einer Verbindungskonfiguration zwischen einem virtuellen Knoten (21) in einer physischen Umgebung und dem virtuellen Netzwerk (51);
virtuellen Netzwerküberwachungsmitteln (30) zum Erfassen einer Verbindungskonfiguration zwischen dem virtuellen Knoten (21) in einer virtuellen Umgebung und dem virtuellen Netzwerk (51); und
virtuellen Netzwerküberwachungsmitteln (60) zum Überwachen des virtuellen Netzwerks (51) auf der Datenebene (40) basierend auf einer Verbindungskonfiguration zwischen dem virtuellen Knoten (21) in der physischen Umgebung und dem virtuellen Netzwerk (51) und einer Verbindungskonfiguration zwischen dem virtuellen Knoten (21) in der virtuellen Umgebung und dem virtuellen Netzwerk (51).

2. Virtuelles Netzwerküberwachungssystem (10) nach Anspruch 1, ferner umfassend Visualisierungsmittel (70) zur Sichtbarmachung der Verbindungskonfiguration zwischen dem virtuellen Knoten (21) in der physischen Umgebung und dem virtuellen Netzwerk (51), und der Verbindungskonfiguration zwischen dem virtuellen Knoten (21) in der virtuellen Umgebung und dem virtuellen Netzwerk (51).

3. Virtuelles Netzwerküberwachungssystem nach Anspruch 2, wobei die virtuellen Netzwerküberwachungsmittel (60) eine Fehlfunktionsstelle detektieren, basierend auf der Verbindungskonfiguration zwischen dem virtuellen Knoten (21) in der physischen Umgebung und dem virtuellen Netzwerk (51) und der Verbindungskonfiguration zwischen dem virtuellen Knoten (21) in der virtuellen Umgebung und dem virtuellen Netzwerk (51), wobei das Visualisierungsmittel (70) die Fehlfunktionsstelle sichtbar macht.

4. Virtuelles Netzwerküberwachungssystem nach Anspruch 1, wobei das virtuelle Netzwerkverwaltungsmittel ein OpenStack ist.

5. Virtuelles Netzwerküberwachungsverfahren zur Verwendung in einem virtuellen Netzwerk (51), das eine Steuerebene (40) enthält, die ein Steuersignal für das virtuelle Netzwerk (51) überträgt, und eine Datenebene (50), die ein Paket des virtuellen Netzwerks (51) überträgt, wobei das Verfahren Folgendes umfasst:
Erfassen einer Verbindungskonfiguration zwischen einem virtuellen Knoten (21) in einer physischen Umgebung und einem virtuellen Netzwerk (51);
Erfassen einer Verbindungskonfiguration zwischen dem virtuellen Knoten (21) in einer virtuellen Umgebung und dem virtuellen Netzwerk (51); und
Überwachen des virtuellen Netzwerks (51), und auf der Datenebene (50) Übertragen eines Pakets des virtuellen Netzwerks (51), basierend auf einer Verbindungskonfiguration zwischen einem virtuellen Knoten (21) in der physischen Umgebung und dem virtuellen Netzwerk (51), und einer Verbindungskonfiguration zwischen dem virtuellen Knoten (21) in der virtuellen Umgebung und dem virtuellen Netzwerk (51).

6. Virtuelles Netzwerküberwachungsverfahren nach Anspruch 5, ferner umfassend das Sichtbarmachen der Verbindungskonfiguration zwischen dem virtuellen Knoten (21) in der physischen Umgebung und dem virtuellen Netzwerk (51), und der Verbindungskonfiguration zwischen dem virtuellen Knoten (21) in der virtuellen Umgebung und dem virtuellen Netzwerk (51).

7. Virtuelles Netzwerküberwachungsverfahren nach Anspruch 6, ferner umfassend:
Detektieren einer Fehlfunktionsstelle auf der Grundlage der Verbindungskonfiguration zwischen dem virtuellen Knoten (21) in der physischen Umgebung und dem virtuellen Netzwerk (51), und der Verbindungskonfiguration zwischen dem virtuellen Knoten (21) in der virtuellen Umgebung und dem virtuellen Netzwerk (51); und
Sichtbarmachen der Fehlfunktionsstelle.

8. Computerprogramm, das, wenn es auf einem Computer ausgeführt wird, den Computer veranlasst, die Schritte nach einem der Verfahrensansprüche 5 bis 7 auszuführen.

## Revendications

1. Système de surveillance de réseau virtuel (10) comprenant un plan de commande (40) qui transfère un signal de commande pour un réseau virtuel (51), et un plan de données (50) qui transfère un paquet de réseau virtuel (51), comprenant :
un moyen d'agent (22) pour acquérir une configuration de connexion entre un nœud virtuel (21) dans un environnement physique et le réseau virtuel (51) ;
un moyen de gestion de réseau virtuel (30) pour acquérir une configuration de connexion entre le nœud virtuel (21) dans un environnement virtuel et le réseau virtuel (51) ; et
un moyen de surveillance de réseau virtuel (60) pour surveiller le réseau virtuel (51), sur le plan de données (40), sur la base d'une configuration de connexion entre le nœud virtuel (21) de l'environnement physique et le réseau virtuel (51), et une configuration de connexion entre le nœud virtuel (21) de l'environnement virtuel et le réseau virtuel (51).

2. Système de surveillance de réseau virtuel (10) selon la revendication 1, comprenant en outre un moyen de visualisation (70) pour visualiser la configuration de connexion entre le nœud virtuel (21) de l'environnement physique et le réseau virtuel (51), et la configuration de connexion entre le nœud virtuel (21) de l'environnement virtuel et le réseau virtuel (51).

3. Système de surveillance de réseau virtuel selon la revendication 2, dans lequel
le moyen de surveillance de réseau virtuel (60) détecte un emplacement de dysfonctionnement, sur la base de la configuration de connexion entre le nœud virtuel (21) de l'environnement physique et le réseau virtuel (51), et la configuration de connexion entre le nœud virtuel (21) de l'environnement virtuel et le réseau virtuel (51), et
le moyen de visualisation (70) visualise l'emplacement du dysfonctionnement.

4. Système de surveillance de réseau virtuel selon la revendication 1, dans lequel le moyen de gestion de réseau virtuel est un OpenStack.

5. Procédé de surveillance réseau virtuel pour une utilisation dans un réseau virtuel (51) qui comporte un plan de commande (40) qui transfère un signal de commande pour le réseau virtuel (51), et un plan de données (50) qui transfère un paquet du réseau virtuel (51), le procédé comprenant :
l'acquisition d'une configuration de connexion entre un nœud virtuel (21) dans un environnement physique et un réseau virtuel (51) ;
l'acquisition d'une configuration de connexion entre le nœud virtuel (21) dans un environnement virtuel et le réseau virtuel (51) ; et
la surveillance du réseau virtuel (51), sur le plan de données (50), transférant un paquet du réseau virtuel (51), sur la base d'une configuration de connexion entre un nœud virtuel (21) de l'environnement physique et le réseau virtuel (51), et une configuration de connexion entre le nœud virtuel (21) de l'environnement virtuel et le réseau virtuel (51).

6. Procédé de surveillance de réseau virtuel selon la revendication 5, comprenant en outre la visualisation de la configuration de connexion entre le nœud virtuel (21) de l'environnement physique et le réseau virtuel (51), et la configuration de connexion entre le nœud virtuel (21) de l'environnement virtuel et le réseau virtuel (51).

7. Procédé de surveillance de réseau virtuel selon la revendication 6, comprenant en outre :
la détection d'un emplacement de dysfonctionnement, sur la base de la configuration de connexion entre le nœud virtuel (21) de l'environnement physique et le réseau virtuel (51), et la configuration de connexion entre le nœud virtuel (21) de l'environnement virtuel et le réseau virtuel (51) ; et
la visualisation de l'emplacement du dysfonctionnement.

8. Programme informatique qui, lorsqu'il est exécuté sur un ordinateur, amène celui-ci à exécuter les étapes selon l'une quelconque des revendications 5 à 7 du procédé.
